# EUROPEAN PATENT APPLICATION

(11) **EP 4 836 518 A1**
(43) Date of publication of application: **04.11.2026**
(21) Application number: 25749137.3
(22) Date of filing: 22.01.2025
(51) Int. Cl.: H04W 36/00, H04W 36/30, H04B 17/373, H04B 17/382, H04W 8/24, G06N 20/00, H04B 17/309, H04L 41/16

(54) **METHOD AND DEVICE FOR MEASUREMENT PREDICTION ACTIVATION AND DEACTIVATION ON TERMINAL SIDE BY USING ARTIFICIAL INTELLIGENCE AND MACHINE LEARNING IN WIRELESS COMMUNICATION SYSTEM**

(30) Priority: 30.01.2024 KR 20240013957; 12.04.2024 KR 20240049103
(71) Applicant: Samsung Electronics Co., Ltd., Suwon-si, Gyeonggi-do 16677 (KR)
(72) Inventor: JEONG, Seungbeom, Suwon-si, Gyeonggi-do 16677 (KR); LEE, Taeseop, Suwon-si, Gyeonggi-do 16677 (KR)
(74) Representative: Nederlandsch Octrooibureau
(86) International application number: PCT/KR2025/001233
(87) International publication number: WO 2025/165050

(57) **Abstract**

The disclosure relates to a 5G or 6G communication system for supporting a higher data transmission rate. This method performed by a terminal of a wireless communication system may comprise the operations of: receiving, from a base station, a first message including configuration information for artificial intelligence and machine learning (AI/ML)-based measurement prediction; on the basis of the configuration information, transmitting, to the base station, a second message for reporting applicability of the AI/ML-based measurement prediction; identifying that the AI/ML-based measurement prediction has been activated; and transmitting, to the base station, a report on a result of the activated AI/ML-based measurement prediction.

## Description

### [Technical Field]

The disclosure relates to a wireless communication system. More specifically, the disclosure relates to a method and a device for activating and deactivating measurement prediction on a terminal side by using artificial intelligence and machine learning.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Disclosure]

### [Technical Problem]

The disclosure is to introduce an AI/ML algorithm-based handover mechanism in order to address problems associated with conventional reactive handover that may occur in a high-density micro cell environment and a high-mobility environment, and to improve the overall performance and stability of a network.

### [Technical Solution]

According to an embodiment of the disclosure, a method performed by a terminal in a wireless communication system is provided. The method includes receiving, from the base station, a first message including configuration information for artificial intelligence and machine learning (AI/ML)-based measurement prediction, transmitting, to the base station, a second message for reporting applicability of AI/ML-based measurement prediction, based on the configuration information, identifying that the AI/ML-based measurement prediction is activated, and transmitting, to the base station, a report on a result of the activated AI/ML-based measurement prediction.

According to an embodiment of the disclosure, a method performed by a base station in a wireless communication system is provided. The method includes transmitting, to a terminal, a first message including configuration information for artificial intelligence and machine learning (AI/ML)-based measurement prediction, receiving, from the terminal, a second message for reporting applicability of the AI/ML-based measurement prediction associated with the configuration information, identifying that the AI/ML-based measurement prediction is activated in the terminal, and receiving, from the terminal, a report on a result of the activated AI/ML-based measurement prediction.

According to an embodiment of the disclosure, a terminal in a wireless communication system is provided. The terminal includes a transceiver and a controller. The controller is configured to receive, from a base station through the transceiver, a first message including configuration information for artificial intelligence and machine learning (AI/ML)-based measurement prediction, transmit, to the base station through the transceiver, a second message for reporting applicability of the AI/ML-based measurement prediction, based on the configuration information, identify that the AI/ML-based measurement prediction is activated, and transmit, to the base station through the transceiver, a report on a result of the activated AI/ML-based measurement prediction.

According to an embodiment of the disclosure, a base station in a wireless communication system is provided. The base station includes a transceiver and a controller. The controller is configured to transmit, to a terminal through the transceiver, a first message including configuration information for artificial intelligence and machine learning (AI/ML)-based measurement prediction, receive, from the terminal through the transceiver, a second message for reporting applicability of the AI/ML-based measurement prediction associated with the configuration information, identify that the AI/ML-based measurement prediction is activated in the terminal, and receive, from the terminal through the transceiver, a report on a result of the activated AI/ML-based measurement prediction.

### [Advantageous Effects]

According to various embodiments of the disclosure, efficiency of a handover process may be improved, proactive responses may be enabled before occurrence of a problem, and network operation, configuration decision-making, and radio resource management performance may be enhanced.

### [Description of Drawings]

FIG. 1 illustrates a structure of a mobile communication system according to an embodiment of the disclosure.
FIG. 2 illustrates radio access state transition in a mobile communication system according to an embodiment of the disclosure.
FIG. 3 is a signal flow diagram illustrating a process in which a UE performs cell measurement and reporting operations according to an embodiment of the disclosure.
FIG. 4 illustrates an operation of reporting a cell measurement result when a specific condition is satisfied according to an embodiment of the disclosure.
FIG. 5 is a signal flow diagram illustrating a procedure for performing mobility-related AI/ML prediction by a UE according to an embodiment of the disclosure.
FIG. 6 is a signal flow diagram illustrating a procedure for activation and deactivation of a configuration for AI/ML prediction (reporting) according to an embodiment of the disclosure.
FIG. 7 is a signal flow diagram illustrating a procedure for activation and deactivation of a configuration for AI/ML prediction (reporting) according to an embodiment of the disclosure.
FIG. 8 is a signal flow diagram illustrating a procedure for activation and deactivation of configuration for AI/ML prediction (reporting) according to an embodiment of the disclosure.
FIG. 9 illustrates a structure of a UE according to an embodiment of the disclosure; and
FIG. 10 illustrates a structure of a base station according to an embodiment of the disclosure.

### [Mode for Invention]

In describing the embodiments in the specification, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Also, the size of each element does not completely reflect the actual size. In the respective drawings, identical or corresponding elements are provided with identical reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference numerals designate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions which execute on a computer or other programmable data processing apparatus to cause a series of operational steps to be performed on the computer or other programmable data processing apparatus to produce a computer implemented process may provide steps for implementing the functions specified in the flowchart block(s).

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card.

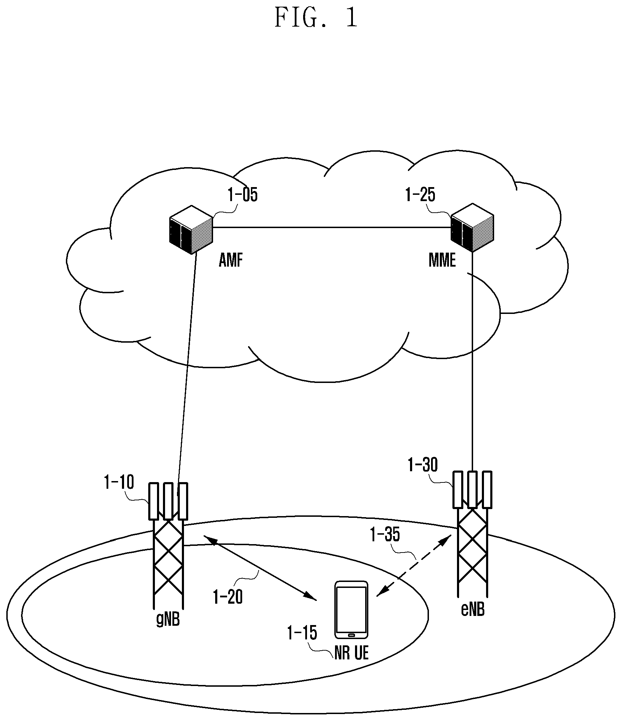

FIG. 1 illustrates a structure of a mobile communication system according to an embodiment of the disclosure.

Referring to FIG. 1, as illustrated therein, a radio access network of a mobile communication system (new radio, NR) according to an embodiment of the disclosure may include a base station (next generation Node B, hereinafter gNB) 1-10 and an access and mobility management function (AMF) (or new radio core network) 1-05. A user equipment (new radio user equipment, hereinafter (NR) UE or terminal) 1-15 may access an external network via the gNB 1-10 and the AMF 1-05. The mobile communication system according to an embodiment of the disclosure may be a next generation wireless mobile communication system, and the gNB may be a next generation base station.

In FIG. 1, the gNB 1-10 may correspond to an evolved Node B (eNB) 1-30 of the conventional LTE system. The gNB may be connected to the NR UE 1-15 through a radio channel 1-20 and may provide outstanding services as compared to a conventional Node B. In the next generation wireless mobile communication system according to an embodiment of the disclosure, since all user traffic is serviced through a shared channel, a device that collects state information, such as buffer statuses, available transmit power states, and channel states of UEs, and performs scheduling accordingly is required, and the gNB 1-10 may serve as the device. In general, one gNB may control multiple cells. In order to implement ultrahigh-speed data transmission beyond the conventional LTE, the next generation wireless mobile communication system may provide a wider bandwidth than the existing maximum bandwidth, may employ an orthogonal frequency division multiplexing (hereinafter referred to as OFDM) as a radio access technology, and may additionally integrate a beamforming technology therewith. Furthermore, the next generation wireless mobile communication system may employ an adaptive modulation & coding (hereinafter referred to as AMC) scheme for determining a modulation scheme and a channel coding rate according to a channel state of a UE.

The AMF 1-05 may perform functions such as mobility support, bearer configuration, and QoS configuration. The AMF 1-05 is a device responsible for various control functions as well as a mobility management function for a UE, and may be connected to multiple base stations.

In addition, the mobile communication system according to an embodiment of the disclosure may interwork with the conventional LTE system, and the AMF 1-05 may be connected to a mobility management entity (MME) 1-25 via a network interface. The MME 1-25 may be connected to the eNB 1-30 that is a conventional base station. The NR UE 1-15 supporting LTE-NR dual connectivity may transmit/receive data while maintaining a connection 1-35 to both the gNB 1-10 and the eNB 1-30.

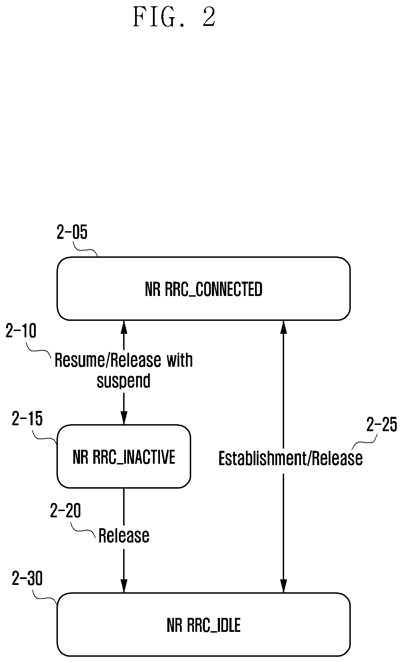

FIG. 2 illustrates radio access state transition in a mobile communication system according to an embodiment of the disclosure.

In the mobile communication system according to embodiments of the disclosure, a UE may have three types of radio resource control (RRC) states or RRC modes. A connected mode (RRC_CONNECTED) 2-05 refers to a radio access state in which a UE is able to transmit/receive data. An idle mode (RRC_IDLE) 2-30 refers to a radio access state in which a UE monitors whether paging is transmitted to the UE. The two modes are radio access states that are also applied to the conventional LTE system, and the details thereof are the same as those of the conventional LTE system. The mobile communication system according to an embodiment of the disclosure may be a next generation mobile communication system.

In the mobile communication system according to an embodiment of the disclosure, an inactive radio access state (RRC_INACTIVE) 2-15 is newly defined. In the inactive radio access state, UE context may be maintained in the base station and the UE, and radio access network (RAN)-based paging may be supported. The characteristics of the inactive radio access state are enumerated as follows.
- Cell re-selection mobility;
- CN - NR RAN connection (both C/U-planes (control plane/user plane)) has been established for UE;
- The UE AS (Access Stratum) context is stored in at least one gNB and the UE;
- Paging is initiated by NR RAN;
- RAN-based notification area is managed by NR RAN;
- NR RAN knows the RAN-based notification area which the UE belongs to;

The UE in the inactive radio access state according to an embodiment of the disclosure may transition to the connected mode or idle mode by using a specific procedure. The transition (2-10) between the connected mode and the inactive mode (2-10) may be performed via a "resume" or "release with suspend" procedure. For example, the UE may transition from the inactive mode to the connected mode according to the resume procedure, and may transition (2-10) from the connected mode to the inactive mode by receiving a release message including suspend configuration information. This procedure may be performed via one or more RRC messages transmitted and received between the UE and the base station, and may include one or more operations. In addition, the UE may transition from the inactive mode to the idle mode via a release-after-resume procedure (2-20). The transition between the connected mode and the idle mode (2-25) may follow the conventional LTE technology. For example, the transition between the modes may be achieved via an establishment or release procedure.

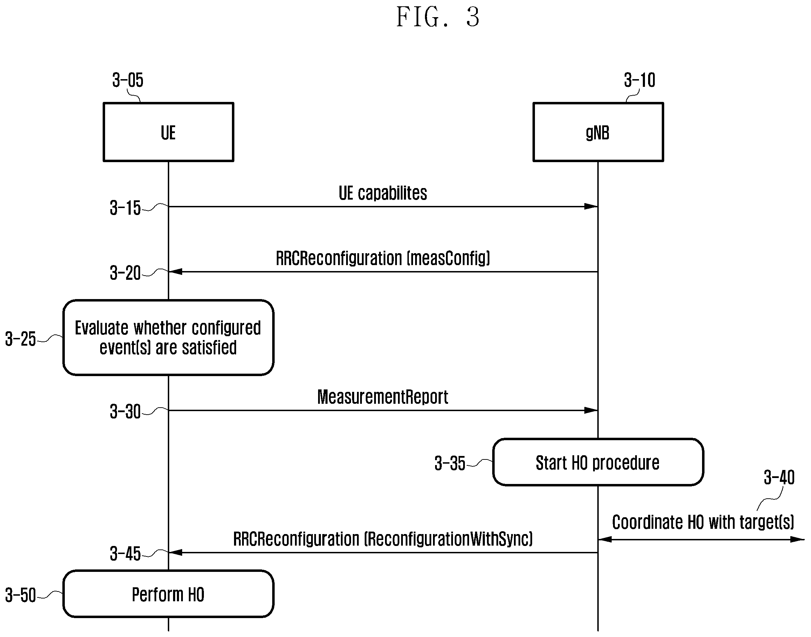

FIG. 3 is a flowchart illustrating a process in which a UE performs cell measurement and reporting operations according to an embodiment of the disclosure.

According to an embodiment of the disclosure, in operation 3-15, a UE 3-05 may report its capability information to a gNB 3-10. In operation 3-20, the gNB 3-10 may transmit an RRCReconfiguration message including configuration information (measConfig IE) related to a cell measurement operation to the UE 3-05.

The configuration information (measConfig IE) may include information required for the UE 3-05 to report measurement results to the gNB 3-10 according to measurement report types (e.g., periodical, event-triggered, and event-triggered periodical). For example, in the case of "event-triggered" or "event-triggered periodical", the UE 3-05 may report a predetermined measurement result when a specific event configured based on the configuration information is satisfied. For example, the following events may be configured in the NR system.
- Normal intra-/inter-RAT measurement-related event(s) are as given in Table 1 below.

**[Table 1]**

| | |
|---|---|
| Event A1: | Serving becomes better than absolute threshold; |
| Event A2: | Serving becomes worse than absolute threshold; |
| Event A3: | Neighbour becomes amount of offset better than PCell/PSCell; |
| Event A4: | Neighbour becomes better than absolute threshold; |
| Event A5: | PCell/PSCell becomes worse than absolute threshold1 AND Neighbour/SCell becomes better than another absolute threshold2; |
| Event A6: | Neighbour becomes amount of offset better than SCell; |
| Event D1: | Distance between UE and a reference location referenceLocation1 becomes larger than configured threshold distanceThreshFromReference1 and distance between UE and a reference location referenceLocation2 becomes shorter than configured threshold distanceThreshFromReference2; |
| Event B1: | Neighbour becomes better than absolute threshold; |
| Event B2: | PCell becomes worse than absolute threshold1 AND Neighbour becomes better than another absolute threshold2; |

- Similar to conditional measurement reporting, when a specific event is satisfied also in a conditional handover, the UE 3-05 may perform handover according to conditional handover configuration information. Event(s) related to the conditional handover are as given in Table 2 below.

**[Table 2]**

| | |
|---|---|
| CondEvent A3: Conditional reconfiguration candidate becomes amount of offset better than PCell/PSCell; | |
| CondEvent A4: Conditional reconfiguration candidate becomes better than absolute threshold; | |
| CondEvent A5: PCell/PSCell becomes worse than absolute threshold1 AND Conditional reconfiguration candidate becomes better than another absolute threshold2; | |
| CondEvent D1: Distance between UE and a reference location referenceLocation1 becomes larger than configured threshold distanceThreshFromReference1 and distance between UE and a reference location referenceLocation2 of conditional reconfiguration candidate becomes shorter than configured threshold distanceThreshFromReference2; | |
| CondEvent T1: Time measured at UE becomes more than configured threshold t1-Threshold but is less than t1-Threshold + duration; | |

- When a specific event is satisfied in a (sidelink) relay, the UE 3-05 may perform a predetermined operation. Event(s) related to the relay are as given in Table 3 below.

**[Table 3]**

| | |
|---|---|
| Event X1: Serving L2 U2N Relay UE becomes worse than absolute threshold1 AND NR Cell becomes better than another absolute threshold2; | |
| Event X2: Serving L2 U2N Relay UE becomes worse than absolute threshold; | |
| Event Y1: PCell becomes worse than absolute threshold1 AND candidate L2 U2N Relay UE becomes better than another absolute threshold2; | |
| Event Y2: Candidate L2 U2N Relay UE becomes better than absolute threshold; | |

- In the case of NR-unlicensed (NR-U), when a specific event is satisfied, the UE 3-05 may perform a predetermined operation. Event(s) related to the NR-U are as given in Table 4 below.

**[Table 4]**

| |
|---|
| Event I1: Interference becomes higher than absolute threshold. |

In operation 3-25, the UE 3-05 may evaluate whether the configured events are satisfied. For example, if the events described above continuously satisfy the predetermined conditions for a predetermined time period (time-to-trigger), the UE 3-05 may consider that the events are satisfied. In operation 3-30, the UE 3-05 may report a MeasurementReport message including a measurement result to the gNB 3-10 when the configured condition is satisfied. Alternatively, the UE 3-05 may perform a predetermined operation corresponding to the condition, for example, a conditional handover.

Upon receiving the measurement result, the gNB 3-10 may use the measurement result for a predetermined purpose. For example, in operation 3-35, the gNB 3-10 may determine whether to trigger a handover of the UE 3-05. In operation 3-40, if triggering a handover, the gNB 3-10 may request a handover from target cell(s). In operation 3-45, the gNB 3-10 may transmit, to the UE 3-05, handover configuration information configured based on predetermined configuration information received from the target cell(s). In operation 3-50, upon receiving the handover configuration information, the UE 3-05 may perform a handover.

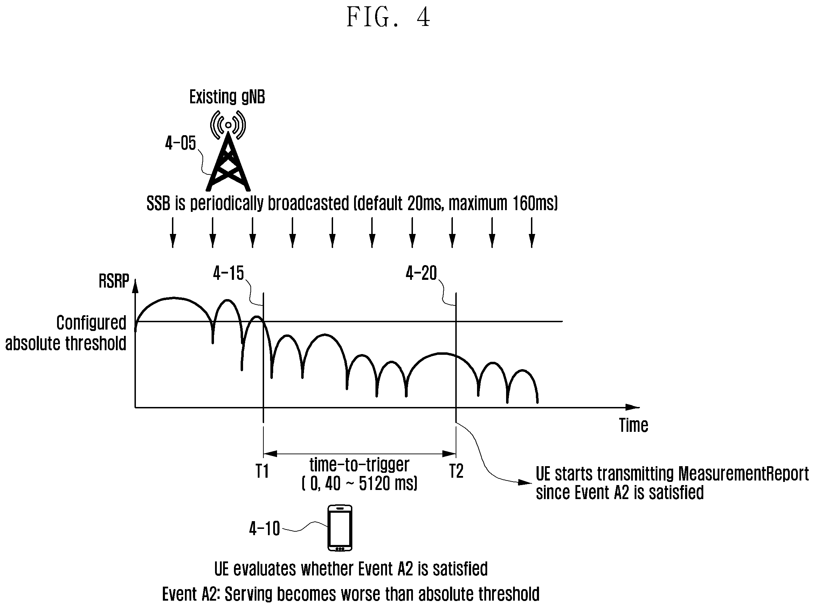

FIG. 4 illustrates an operation of reporting a cell measurement result when a specific condition is satisfied according to an embodiment of the disclosure.

Referring to FIG. 4, a UE 4-10 may evaluate the strength or quality of a signal from a gNB 4-05, based on a synchronization signal block (SSB) or a channel state information reference signal (CSI-RS) transmitted from the gNB 4-05. Hereinafter, for convenience of explanation, a cell measurement result reporting operation of the UE 4-10 will be described mainly based on the SSB, but the same may also be applied to the CSI-RS.

In the case of the SSB, the transmission period of the SSB may be determined according to a configuration of the gNB 4-05. In general, the transmission period of the SSB may be configured as 20ms, and the gNB 4-05 may transmit an SSB with a maximum period of 160ms.

When the gNB 4-05 configures event A2 for the UE 4-10, the UE 4-10 may evaluate whether a reference signal received power (RSRP) value measured based on the SSB remains below than a configured absolute threshold value during a predetermined time interval (time-to-trigger (TTT)) starting from a time point 4-15 at which the RSRP value measured based on the SSB falls below than the threshold value.

If the RSRP value measured based on the SSB remains continuously below a configured absolute threshold value from an initial time point 4-15 at which the RSRP value falls below the absolute threshold value to a time point 4-20 at which a time interval has elapsed, the UE 4-10 may consider that Event A2 is satisfied and may report, to the gNB 4-05, a measurement report triggered by Event A2. As described above, by considering a TTT in determining whether a condition for performing the measurement report is satisfied, variability of a measurement signal may be compensated. The TTT value may be configured by the gNB 4-05 for each event.

If the above-mentioned events continuously satisfy a specific condition for a specific time interval (TTT), the UE 4-10 may perform an operation corresponding to the purpose of the configured event according to the purpose of the event. If a type of a measurement report according to measurement-related configuration information received by the UE 4-10 is configured as "periodical" or "event-triggered periodical", the UE 4-10 may perform a measurement report periodically.

In a conventional layer 3 (L3) handover mechanism, a handover is triggered and executed by a network or a gNB, based on a previously reported historical cell measurement results and/or cell measurement events. That is, the handover may be understood as being performed in a reactive approach.

Such a reactive handover approach may be efficient for existing services in a case where a UE moves between macro cells, or in a case where the UE has low mobility. However, this reactive handover may cause problems in a case where the UE has high mobility or moves between high-density micro cells, or for future services such as XR. For example, an unintended situation may occur, such as a handover failure, a radio link failure, a ping-pong phenomenon, a throughput loss, or excessively early or late handover. Accordingly, a conditional handover has been introduced in Rel-16 to improve handover robustness, and a lower-layer triggered mobility (LTM) handover has been introduced in Rel-18 to reduce service interruption time caused by frequent handovers between small cells. However, these two handover mechanisms are still reactive, and thus they may not be sufficient.

On the other hand, a mechanism based on an artificial intelligence (AI) and machine learning (ML) algorithm may enable a proactive approach. For example, a UE may generate predicted cell measurement information for a future time through an AI/ML model, and may report the predicted cell measurement information to a gNB(or a network). Based on this, the gNB may prepare a handover in advance to prevent latency and proactively instruct the UE to perform a handover, thereby completing the handover of the UE to another gNB or cell before occurrence of a problem (e.g., a radio link failure). In addition, by receiving cell measurement information from the UE, the gNB may achieve improved handover and/or radio resource management (RRM) performance compared to a reactive approach. For example, the gNB may make a better network operation/configuration decision or perform a proactive action to avoid unintended events.

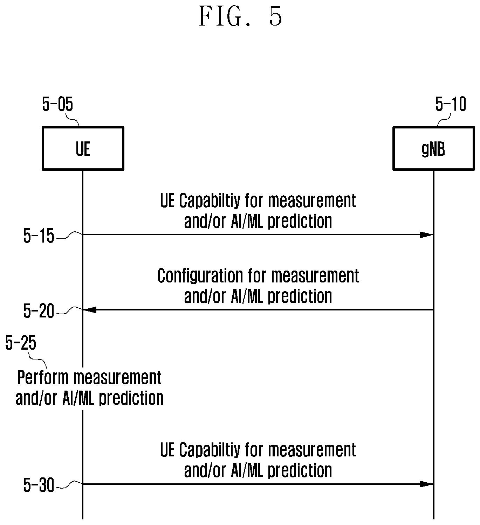

FIG. 5 is a flowchart illustrating a procedure for performing mobility-related AI/ML prediction related by a UE according to an embodiment of the disclosure.

In operation 5-15, a UE 5-05 may report, to a gNB 5-10 or a network, mobility-related AI/ML prediction capabilities and/or cell measurement-related capabilities. The report may be transferred through a UE capability message (e.g., a UECapabilityInformation message). To request the report, the gNB may previously transmit, to the UE, a message requesting transmission of the corresponding UE capability (e.g., a UECapabilityRequest message). The mobility-related AI/ML prediction capability may indicate at least one of the following or a combination thereof.
- Whether the UE supports operations using mobility-related AI/ML
- Whether the UE supports prediction using mobility-related AI/ML
- Whether the UE supports cell-level measurement prediction (e.g., RSRP/RSRQ/SINR) using mobility-related AI/ML
- Whether the UE supports beam-level measurement prediction (e.g., RSRP/RSRQ/SINR) using mobility-related AI/ML
- Whether the UE supports handover failure prediction using mobility-related AI/ML
- Whether the UE supports radio link failure (RLF) prediction using mobility-related AI/ML
- Whether the UE supports prediction of a specific event (e.g., event A3) using Mobility-related AI/ML

When one or more AI/ML models are defined/indicated, the above-described mobility-related AI/ML prediction capability may be defined/indicated for each AI/ML model (e.g., for each model ID).

Examples of a specific event using the mobility-related AI/ML may be shown in Table 5 below.

**[Table 5]**

| | |
|---|---|
| Event A1: | Serving becomes better than absolute threshold; |
| Event A2: | Serving becomes worse than absolute threshold; |
| Event A3: | Neighbour becomes amount of offset better than PCell/PSCell; |
| Event A4: | Neighbour becomes better than absolute threshold; |
| Event A5: | PCell/PSCell becomes worse than absolute threshold1 AND Neighbour/SCell becomes better than another absolute threshold2; |
| Event A6: | Neighbour becomes amount of offset better than SCell; |
| Event D1: | Distance between UE and a reference location *referenceLocation1* becomes larger than configured threshold *distanceThreshFromReference1* and distance between UE and a reference location *referenceLocation2* becomes shorter than configured threshold *distanceThreshFromReference2;* |
| CondEvent A3: | Conditional reconfiguration candidate becomes amount of offset better than PCell/PSCell; |
| CondEvent A4: | Conditional reconfiguration candidate becomes better than absolute threshold where *condEventA4* can also be used for current PSCell (i.e., in case it is configured as candidate PSCell for CondEvent A4 evaluation) for CHO with candidate SCG(s) case; |
| CondEvent A5: | PCell/PSCell becomes worse than absolute threshold1 AND Conditional reconfiguration candidate becomes better than another absolute threshold2; |
| CondEvent D1: Distance between UE and a reference location *referenceLocation1* becomes larger than configured threshold *distanceThreshFromReference1* and distance between UE and a reference location *referenceLocation2* of conditional reconfiguration candidate becomes shorter than configured threshold *distanceThreshFromReference2;* | |
| CondEvent D2: Distance between UE and a moving reference location determined based on *referenceLocation1* becomes larger than configured threshold *distanceThreshFromReference1* and distance between UE and a moving reference location determined based on *referenceLocation2* of conditional reconfiguration candidate becomes shorter than configured threshold *distanceThreshFromReference2;* | |
| CondEvent T1: Time measured at UE becomes more than configured threshold *t1-Threshold* but is less than *t1-Threshold + duration;* | |
| Event X1: | Serving L2 U2N Relay UE becomes worse than absolute threshold1 AND NR Cell becomes better than another absolute threshold2; |
| Event X2: | Serving L2 U2N Relay UE becomes worse than absolute threshold; |
| For event I1, either be derived | measurement reporting event is based on CLI measurement results, which can based on SRS-RSRP or CLI-RSSI. |
| Event I1: Interference | becomes higher than absolute threshold. |
| The reporting events concerning Aerial UE altitude are labelled H*N* with *N* equal to 1 and 2. Additionally, the reporting events concerning Aerial UE altitude and the neighboring cell measurements simultaneously are labelled A*M*H*N* with *M* equal to 3, 4, 5 and *N* equal to 1, 2. | |
| Event H1: | Aerial UE altitude becomes higher than a threshold; |
| Event H2: | Aerial UE altitude becomes lower than a threshold. |
| Event A3H1: | Neighbour becomes offset better than SpCell and the Aerial UE altitude becomes higher than a threshold. |
| Event A3H2: | Neighbour becomes offset better than SpCell and the Aerial UE altitude becomes lower than a threshold. |
| Event A4H1: | Neighbour becomes better than threshold1 and the Aerial UE altitude becomes higher than a threshold2. |
| Event A4H2: | Neighbour becomes better than threshold1 and the Aerial UE altitude becomes lower than a threshold2. |
| Event A5H1: | SpCell becomes worse than threshold1 and neighbour becomes better than threshold2 and the Aerial UE altitude becomes higher than a threshold3. |
| Event A5H2: | SpCell becomes worse than threshold1 and neighbour becomes better than threshold2 and the Aerial UE altitude becomes lower than a threshold3. |

When the UE supports the above-described mobility-related AI/ML prediction capability and/or cell measurement-related capability, the UE may indicate support for the above-described capabilities to the gNB by including a relevant indicator in a UE capability message or by setting the indicator as a specific value (e.g., true). Additionally or optionally, when the UE does not support the above-described capability, the UE may indicate to the gNB that the capabilities are not supported by not including the relevant indicator in the UE capability message or by setting the indicator as specific value (e.g., false).

In operation 5-20, the gNB 5-10 may provide the UE 5-05 with a configuration related to cell measurement and AI/ML prediction. The configuration may be generated and provided based on the UE capability received in operation 5-15. The configuration may include information regarding an AI/ML model executed by the UE (i.e., a UE-sided model). Alternatively, information regarding the AI/ML model executed by the UE may be provided to the UE from an external server (e.g., OTT).

In addition or optionally, the UE may receive a cell measurement configuration (e.g., MeasConfig) from the gNB, together with or separately from the AI/ML prediction-related configuration. The cell measurement configuration may be transmitted through an RRC Reconfiguration message or an RRC Resume message, and may include information regarding "measurement objects" indicating radio resource information for which the UE is to perform measurement. For example, each measurement object may indicate a frequency/time location and/or subcarrier spacing information of a reference signal (e.g., SSB or CSI-RS) that the UE needs to measure. Each measurement object configuration (e.g., MeasObjectNR) may be indicated/identified by a specific ID (e.g., MeasObjectId).

Additionally or optionally, the configuration may include a "reporting configuration" that indicates a configuration related to measurement reporting by the UE. For example, each reporting configuration may indicate whether the UE is to perform reporting periodically or to trigger reporting upon satisfaction of a specific event, and may indicate a reference signal used by the UE for measurement/reporting. Each reporting configuration (e.g., ReportConfigNR) may be indicated/identified by a specific ID (e.g., ReportConfigId). A cell measurement configuration (e.g., MeasConfig) may include one or more measurement object configurations (e.g., MeasObjectNR) and/or one or more reporting configurations (e.g., ReportConfigNR), and a specific measurement object may be associated with a specific reporting configuration. To this end, the cell measurement configuration may include an association ID (e.g., MeasId) for indicating/identifying an association between an ID of the associated measurement object and an ID of a reporting configuration. In this case, in the following operations 5-25 and 5-30, the UE may perform measurement and reporting in accordance with the corresponding measurement object and the associated reporting configuration.

In operation 5-25, the UE 5-05 may perform cell measurement and perform AI/ML prediction according to the received cell measurement and AI/ML prediction-related configuration.

In operation 5-30, the UE 5-05 may transmit, to the gNB, information/report generated as a result of performing cell measurement and AI/ML prediction (i.e., as a result of operating an AI/ML model) (e.g., through a MeasurementReport message). For example, the UE may transmit, to the gNB, predicted cell measurement values for a future time (e.g., a reference signal received power (RSRP), a reference signal received quality (RSRQ), or a signal to interference and noise ratio (SINR)). The predicted cell measurement values may be a cell-level measurement value or a beam-level measurement value. The predicted cell measurement values may be generated by combining the measurement result values received from a physical layer and AI/ML prediction values (e.g., using Layer 3 filtering). Alternatively, the predicted cell measurement values may be generated based only on AI/ML prediction values (e.g., by using Layer 3 filtering). The UE may include an association ID (e.g., MeasId) in each measurement report (e.g., MeasResults), thereby indirectly indicating, to the gNB, which measurement object (e.g., indicated by MeasObjectId) and which reporting configuration (e.g., indicated by ReportConfigId) are associated with the measurement report. As a result of operating the AI/ML model, the UE may report, to the gNB, predicted events (e.g., Event A3, radio link failure (RLF), and handover failure) in addition to the predicted cell measurement values (e.g., RSRP, RSRQ, SINR). In addition, the UE may indicate, to the network, prediction accuracy or a probability of occurrence of the predicted cell measurement values or events, thereby indicating how accurate the prediction is or with what probability the predicted values or events will occur.

When the UE transmits, to a gNB, predicted cell measurement values obtained by operating a UE-sided model, the gNB may use the predicted cell measurement values to prepare for a handover of the UE in advance, or may previously complete the handover of the UE to another cell or another gNB before occurrence of a radio link failure (RLF). In addition, the gNB may also prevent a handover ping-pong phenomenon. However, from the perspective of the UE, operating of the UE-sided AI/ML model may require a large amount of computing resources and energy consumption. In addition, if an excessive amount of prediction information is generated by operating the AI/ML model, this may result in significant signaling overhead between the UE and the network, thereby causing waste of radio resources. Accordingly, the network needs to appropriately indicate/configure, for the UE, AI/ML prediction-related configuration to an extent necessary according a situation (e.g., based on a network determination).

According to an embodiment of the disclosure, in operation 5-20, the gNB may optionally provide an AI/ML prediction configuration to the UE. In this case, the cell measurement configuration and the AI/ML prediction configuration may be associated with each other. In operation 5-20, the UE may receive one or more measurement objects (e.g., each indicated by MeasObjectId), one or more reporting configurations (e.g., each indicated by ReportConfigId) through the cell measurement configuration, and may receive one or more association IDs (e.g., MeasId) for associating them.

According to an embodiment of the disclosure, in operation 5-20, the gNB may indicate that the corresponding reporting configuration is used for AI/ML prediction by including an AI/ML prediction indicator or relevant configuration information in a reporting configuration (e.g., ReportConfig). Upon receiving the same, in operations 5-25 and 5-30, the UE may perform AI/ML prediction during cell measurement/reporting associated with the reporting configuration indicated above, and may report AI/ML prediction result values (e.g., predicted RSRP, RSRQ, and SINR values) to the gNB.

According to an embodiment of the disclosure, in operation 5-20, the gNB may indicate a reporting configuration ID (e.g., ReportConfigId) for which AI/ML prediction is to be used. Upon receiving the same, in operations 5-25 and 5-30, the UE may perform AI/ML prediction during cell measurement/reporting associated with the reporting configuration indicated above (e.g., the reporting configuration indicated by ReportConfigId), and may report AI/ML prediction result values (e.g., predicted RSRP, RSRQ, and SINR values) to the gNB.

According to an embodiment of the disclosure, in operation 5-20, the gNB may indicate an association ID (e.g., MeasId) for which AI/ML prediction is to be used. Upon receiving the same, in operations 5-25 and 5-30, the UE may perform AI/ML prediction during cell measurement/reporting indicated by the association ID (e.g., MeasId) indicated above, and may report AI/ML prediction result values (e.g., predicted RSRP, RSRQ, and SINR values) to the gNB.

According to an embodiment of the disclosure, in operation 5-20, the gNB may indicate that the corresponding measurement object is used for AI/ML prediction by including an AI/ML prediction indicator or relevant configuration information in a measurement object (e.g., MeasObjectNR). Upon receiving the same, in operations 5-25 and 5-30, the UE may perform AI/ML prediction during cell measurement/reporting associated with the measurement object indicated above, and may report AI/ML prediction result values (e.g., predicted RSRP, RSRQ, and SINR values) to the gNB.

According to an embodiment of the disclosure, in operation 5-20, the gNB may indicate a measurement object ID (e.g., MeasObjectId) for which AI/ML prediction is to be used . Upon receiving the same, in operations 5-25 and 5-30, the UE may perform AI/ML prediction during cell measurement/reporting associated with the measurement object indicated above (e.g., indicated by MeasObjectId), and may report AI/ML prediction result values (e.g., predicted RSRP, RSRQ, and SINR values) to the gNB.

According to an embodiment of the disclosure, in operation 5-20, a measurement object (e.g., MeasObjectAIML) for which AI/ML prediction is to be used may be defined separately from a cell measurement object (e.g., MeasObject), and the gNB may indicate, by using the separate measurement object, a measurement object for which AI/ML prediction is to be used. Upon receiving the same, in operations 5-25 and 5-30, the UE may perform AI/ML prediction during cell measurement/reporting associated with the measurement object indicated above, and may report AI/ML prediction result values (e.g., predicted RSRP, RSRQ, and SINR values) to the gNB.

According to an embodiment of the disclosure, in operation 5-20, a reporting configuration (e.g., ReportConfigAIML) for which AI/ML prediction is to be used may be defined separately from a cell reporting configuration (e.g., ReportConfig), and the gNB may indicate, using the separate reporting configuration, a reporting configuration for which AI/ML prediction is to be used. Upon receiving the same, in operations 5-25 and 5-30, the UE may perform AI/ML prediction during cell measurement/reporting associated with the reporting configuration indicated above, and may report AI/ML prediction result values (e.g., predicted RSRP, RSRQ, and SINR values) to the gNB.

According to an embodiment of the disclosure, in operation 5-30, the AI/ML prediction result values (e.g., predicted RSRP, RSRQ, and SINR values) transmitted by the UE may be transmitted together with actual cell measurement values (e.g., actually measured RSRP, RSRQ, and SINR values). In order to distinguish between the actual cell measurement values and the AI/ML prediction result values included in the measurement report of the UE, a dedicated IE or parameter for the AI/ML prediction result values may be defined and included in the measurement report. For example, a new IE, such as MeasResultsAIML, may be defined, and actual cell measurement values in a measurement report message (e.g., MeasurementReport) transmitted by the UE to the gNB may be included in MeasResults, and AI/ML prediction result values may be included in MeasResultsAIML and transmitted. As another example, separate parameters (e.g., measResultServingMOListAIML, measResultNeighCellsAIML) including AI/ML prediction result values in MeasResults may be newly defined within MeasResults and reported to the gNB.

According to an embodiment of the disclosure, in operation 5-30, the UE may report conventional cell measurement values (e.g., MeasResultNR) by including a measurement value (e.g., RSRP and/or RSRQ and/or SINR) for only a single measurement time point per cell (e.g., indicated by a PhysCellId) or per beam, whereas the UE may report AI/ML prediction values by including respective measurement values for one or more future time points. For example, in operation 5-30, the UE may transmit, to the gNB, predicted RSRP, RSRQ, and SINR values for a specific cell at 2 seconds, 4 seconds, and 6 seconds later. In operation 5-20, the network or the gNB may configure a time interval between prediction values (e.g., 2 seconds in the above example) for the UE. For example, when a channel state of the UE changes rapidly (e.g., when the UE is moving), the network or the gNB may receive results of prediction of information on the rapidly changing channel state quickly and accurately by configuring a short prediction interval within a near-future time period. Conversely, the network or the gNB may desire to obtain intermittent prediction results by configuring a longer prediction interval for a UE having a relatively static channel. In addition, the network or the gNB may configure a maximum number of prediction values to be reported at a time by the UE (e.g., within MeasResultNR) in operation 5-20. For example, when the network or the gNB determines that signaling overhead is high, it may instruct the UE to report a relatively small number of prediction values. Conversely, when the network or the gNB desires to obtain a large amount of prediction values from the UE, it may instruct the UE to report a relatively large number of prediction values.

According to an embodiment of the disclosure, in operation 5-30, the UE may, instead of transmitting an absolute value (e.g., -70 dBm) for a prediction value, transmit, to the gNB, a difference (e.g., -10 dB) between the prediction value and a current measurement value or an immediately preceding prediction value (e.g., -60 dBm). For example, for a specific cell, the UE may transmit, to the gNB, a current measured RSRP (e.g., -43 dBm), together with a difference (e.g., 3 dB) between the current measurement value and a predicted RSRP value at 2 seconds later (e.g., -40 dBm), a difference (e.g., 5 dB) between the current measurement value and a predicted RSRP value at 4 seconds later (e.g., -38 dBm), and a difference (e.g., -2 dB) between the current measurement value and a predicted RSRP value at 6 seconds later (e.g., -45 dBm). As another example, for a specific cell, the UE may transmit, to the gNB, a current measured RSRP (e.g., -43 dBm), together with a difference (e.g., 3 dB) between a predicted RSRP value at 2 seconds later (e.g., -40 dBm) and an immediately preceding prediction value, a difference (e.g., 2 dB) between a predicted RSRP value at 4 seconds later (e.g., -38 dBm) and a previous measurement value (i.e., the predicted RSRP value at 2 seconds later = -40 dBm), and a difference (e.g., -7 dB) between a predicted RSRP value at 6 seconds later (e.g., -45 dBm) and a previous measurement value (i.e., the predicted RSRP value at 4 seconds later = -38 dBm). Although RSRP is described above as an example, other measurement metrics such as RSRQ and SINR may be applied in the same manner. Accordingly, the UE may transmit prediction values to the gNB by using fewer bits than when indicating absolute values of RSRP, RSRQ, and SINR.

According to an embodiment of the disclosure, in operation 5-20, the network or the gNB may configure a restriction on a cell or a neighboring cell for which the UE performs AI/ML-based prediction measurement and/or reporting. Such a restriction may be required to reduce consumption of computing resources and energy of the UE due to excessive operating of an AI/ML model, and at the same time to reduce excessive use of radio resources due to excessive AI/ML prediction-related reporting.

According to an embodiment of the disclosure, in operation 5-20, the network or the gNB may indicate one or more cells or neighboring cells within a measurement object. In operations 5-25 and 5-30, the UE may perform AI/ML prediction and/or reporting for the indicated cells, and may not perform AI/ML prediction and/or reporting for cells that are not indicated.

According to an embodiment of the disclosure, in operation 5-20, the network may limit a maximum number of cells or neighboring cells for which the UE performs AI/ML prediction-related operations and/or reporting. In operations 5-25 and 5-30, the UE may perform AI/ML prediction and/or reporting for cells up to the indicated number. For example, when the number of detected cells or neighboring cells exceeds the indicated number, the UE may select cells up to the indicated number in descending order of actual cell measurement values (e.g., RSRP, RSRQ, or SINR). Thereafter, the UE may perform AI/ML prediction and/or reporting for the selected cells. As another example, when the number of detected cells or neighboring cells exceeds the indicated number, the UE may first perform AI/ML prediction for all detected/measured cells, and then select cells up to the indicated number in descending order of predicted cell measurement values (e.g., RSRP, RSRQ, or SINR) or prediction accuracy/probability. Thereafter, the UE may perform AI/ML reporting for the selected cells.

According to an embodiment of the disclosure, as a result (output) of operating an AI/ML model, the UE may, in operation 5-30, report not only predicted cell measurement values but also predicted events (e.g., handover failure, RLF, and Event A2) to the gNB. Additionally or alternatively, as an output of operating the AI/ML model, the UE may include, in the report, a time point and/or a time interval at which occurrence of an event is predicted (e.g., including a case where the event is satisfied at least once within the interval or a case where the event is satisfied throughout the interval), and transmit the same.

According to an embodiment of the disclosure, the UE may, as an output of operating an AI/ML model, include actual cell measurement values and/or predicted cell measurement values in the report and transmit the same. Additionally or alternatively, the UE may, as an output of operating the AI/ML model, include a probability of occurrence of the event and/or prediction accuracy in the report and transmit the same.

Meanwhile, since an AI/ML model operated by the UE may generate different outputs depending on input information (e.g., mobility of the UE, cell measurement values, and location information), content previously reported by the UE may be changed. For example, the UE may predict detection of a specific event (e.g., predicting, at time T1, an event at time t1, where T1 < t1) and report the same to the gNB (report 1), but may later predict that the event will no longer occur (e.g., predicting at time T2 that the event will not occur at time t1, where T1 < T2 < t1). In this case, the UE may indicate, to the gNB, via a new report (report 2), that the previous report (report 1) is no longer valid. As another example, when at least one of the following conditions is satisfied, the UE may indicate, to the gNB, that a previous prediction is no longer valid, or may indicate/report that the condition is satisfied.
- Condition 1: a case in which the UE predicts that an event predicted in a previous report will no longer occur (e.g., when a leaving condition of the event is satisfied)
- Condition 2: a case in which a prediction probability of an event predicted in a previous report (at a current time or a specific time t) is less than a specific threshold
- Condition 3: a case in which a prediction probability of an event predicted in a previous report (at a current time or a specific time t) is less than a prediction probability in the previous report
- Condition 4: a case in which a prediction probability of an event predicted in a previous report (at a current time or a specific time) is less than a value obtained by subtracting a specific hysteresis value from a prediction probability in the previous report
- Condition 5: a case in which a time (e.g., T2) at which the UE predicts that the event will not occur (at a current time or a specific time) is earlier than an expected event occurrence time (e.g., t1) or interval expected in the previous report
- Condition 6: a case in which a prediction time window at a time point at which the UE performs prediction includes a time point or an interval within a previous prediction time window in which occurrence of an event was indicated/reported in the previous report (e.g., in operation 5-20, the gNB may instruct/configure the UE to perform event prediction for a time interval, with reference to a prediction time, from time a (e.g., 3 seconds) to time b (e.g., 10 seconds) after the prediction time, and the UE may predict events occurring within a prediction time window having a length of (b-a) (e.g., 7 seconds). The prediction time window may move along a time axis as time progresses. In this situation, the UE may predict, at time T1, that a specific event will occur at a specific time t1 within a prediction time window [t_{1,1}, t_{1,2}], and report the output thereof to the gNB, where t_{1,1} may be (T1+a) seconds and t_{1,2} may be (T1+b) seconds. Thereafter, the UE may predict, at time T2 (>T1), that the event will no longer occur at time t1, where t1 is included in a prediction time window [t_{2,1}, t_{2,2}]. In this case, t_{2,1} may be (T2+a) seconds and t_{2,2} may be (T2+b) seconds).

Information on the above-described threshold value, hysteresis value, prediction target time point, and/or prediction time window (e.g., a, b) may be determined based on predefined fixed values or may be determined based on values configured/indicated by the network in operation 5-20.

In operation 5-30, the UE may indicate that a previous measurement report corresponding to an association ID (e.g., MeasId) is no longer valid, or that at least one of the above conditions is satisfied, by including the association ID (e.g., MeasId) and/or a specific new indicator. Alternatively, by reporting the association ID (e.g., MeasId) without including information on an occurrence time point or a time interval of the event, the UE may indicate that the previous measurement report is no longer valid or that at least one of the above conditions is satisfied. In this case, when the UE reports the association ID (e.g., MeasId) and includes information on a time point or a time interval at which the event is predicted to occur, this may indicate that the UE updates or changes the occurrence time point or the time interval of the event.

According to an embodiment of the disclosure, a new event for cell measurement reporting or reporting of cell measurement prediction values may be defined. For example, in operation 5-20, the gNB may include information on the event in a reporting configuration (e.g., ReportConfigNR) and transmit the same to the UE. The event may be configured as at least one of the following examples or a combination thereof.
- Event 1. An entering condition of an event may be satisfied when a variation amount (or a value obtained by subtracting a positive hysteresis value from the variation amount) of measurement values (e.g., Layer 3 filtered RSRP and/or RSRQ and/or SINR) for a serving cell or a neighboring cell is greater than a specific threshold value during a specific time-to-trigger (TTT) period (e.g., when the UE is moving).
   * For example, the variation amount of the cell measurement values may be a variance value or a standard deviation value of the cell measurement values.
   * For example, the variation amount of the cell measurement values may be defined as a difference between a reference value of the cell measurement values and a current cell measurement value, and the reference value may be a value that is reconfigured as the cell measurement value at a corresponding time whenever a specific condition is satisfied (e.g., when a measurement value at that time is greater than the reference value, when the entering condition of the event is not satisfied during the TTT, after completion of a handover to a new gNB, or after successful completion of a random access procedure to a new gNB).

Conversely, a leaving condition of the event may be satisfied when a variation amount (or a value obtained by adding a positive hysteresis value to the variation amount) of measurement values (e.g., Layer 3 filtered RSRP and/or RSRQ and/or SINR) for a serving cell or a neighboring cell is less than a specific threshold value during a specific time-to-trigger (TTT) period (e.g., when the UE is stationary). The gNB may also configure a parameter (e.g., reportOnLeave) indicating whether to allow or prohibit reporting of measurement values and/or prediction values when the UE satisfies the leaving condition.

- Event 2. An entering condition of an event may be satisfied when a variation amount (or a value obtained by subtracting a positive hysteresis value from the variation amount) of predicted measurement values (e.g., predicted Layer 3 filtered RSRP and/or RSRQ and/or SINR) for a serving cell or a neighboring cell is greater than a specific threshold value during a specific time-to-trigger (TTT) period (e.g., when the UE is moving).
   * For example, the variation amount of the predicted cell measurement values may be a variance value or a standard deviation value of the predicted cell measurement values.
   * For example, the variation amount of the predicted cell measurement values may be defined as a difference between a reference value of the predicted cell measurement values and the predicted cell measurement values, and the reference value may be a value that is reconfigured as the predicted cell measurement value whenever a specific condition is satisfied (e.g., when a predicted value is greater than the reference value, when the entering condition of the event is not satisfied during the TTT, after completion of a handover to a new gNB or when it is predicted to be completed, or after successful completion of a random access procedure to a new gNB or when it is predicted to be completed).

Conversely, a leaving condition of the event may be satisfied when a variation amount (or a value obtained by adding a positive hysteresis value to the variation amount) of predicted measurement values (e.g., predicted Layer 3 filtered RSRP and/or RSRQ and/or SINR) for a serving cell or a neighboring cell is less than a specific threshold value during a specific time-to-trigger (TTT) period (e.g., when the UE is stationary). The gNB may also configure a parameter (e.g., reportOnLeave) indicating whether to allow or prohibit reporting of measurement values and/or prediction values when the UE satisfies the leaving condition.
- Event 3. An entering condition of Event 1 described above may be defined as a leaving condition of Event 3, and a leaving condition of Event 1 described above may be defined as an entering condition of Event 3.
- Event 4. An entering condition of Event 2 described above may be defined as a leaving condition of Event 4, and a leaving condition of Event 2 described above may be defined as an entering condition of Event 4.
- Event 5. An entering condition of an event may be satisfied when predicted measurement values (e.g., predicted Layer 3 filtered RSRP and/or RSRQ and/or SINR) for a serving cell or a neighboring cell (or a value obtained by subtracting a positive hysteresis value from the predicted values) are greater than a specific threshold value during a specific time-to-trigger (TTT) period (e.g., when the UE is close to the corresponding cell).

Conversely, a leaving condition of the event may be satisfied when predicted measurement values (e.g., predicted Layer 3 filtered RSRP and/or RSRQ and/or SINR) for a serving cell or a neighboring cell (or a value obtained by adding a positive hysteresis value to the predicted values) are less than a specific threshold value during a specific time-to-trigger (TTT) period (e.g., when the UE is far from the corresponding cell). The gNB may configure, together with the above, a parameter (e.g., reportOnLeave) indicating whether to allow or prohibit reporting of measurement values and/or prediction values when the UE satisfies the leaving condition.
- Event 6. An entering condition of Event 5 described above may be defined as a leaving condition of Event 6, and a leaving condition of Event 5 described above may be defined as an entering condition of Event 6.
- Event 7. An entering condition of an event may be satisfied when an RLF for a serving cell or a neighboring cell is predicted/detected. Additionally or alternatively, a leaving condition of the event may be satisfied when the RLF for the serving cell or the neighboring cell is no longer predicted/detected.
- Event 8. An entering condition of Event 7 described above may be defined as a leaving condition of Event 8, and a leaving condition of Event 7 described above may be defined as an entering condition of Event 8.
- Event 9. An entering condition of an event may be satisfied when a handover failure (HOF) (for a target/neighboring cell) is predicted/detected. Additionally or alternatively, a leaving condition of the event may be satisfied when the HOF (for the target/neighboring cell) is no longer predicted/detected.
- Event 10. An entering condition of Event 9 described above may be defined as a leaving condition of Event 10, and a leaving condition of Event 8 described above may be defined as an entering condition of Event 9.
- Event 11. An entering condition of an event may be satisfied when a time of stay (TOS) in a target cell after completion of a handover is predicted/detected to be short. For example, the entering condition of the event may be satisfied when the TOS of the handover is predicted/detected to be less than or equal to a specific threshold value. Additionally or alternatively, a leaving condition of the event may be satisfied when the TOS of the handover is predicted/detected to be long. For example, the leaving condition of the event may be satisfied when the TOS of the handover is predicted/detected to be greater than or equal to a specific threshold value.
- Event 12. An entering condition of Event 11 described above may be defined as a leaving condition of Event 12, and a leaving condition of Event 11 described above may be defined as an entering condition of Event 12.

According to an embodiment of the disclosure, when comparing cell measurement values or predicted values in order to identify whether the above-described entering condition and leaving condition are satisfied, the UE may perform calculation by applying different offsets per cell or per measurement object.

According to an embodiment of the disclosure, at least one of the above-described threshold, TTT, hysteresis, indicator reportOnLeave, per-cell offset, and per-measurement-object offset may be a predefined fixed value, or may be a value configured/indicated by the network in operation 5-20.

According to an embodiment of the disclosure, when an entering condition or a leaving condition of the event (e.g., when the reportOnLeave indicator is configured as true) is satisfied, the UE may perform reporting of cell measurement values and/or prediction values in operation 5-30. When the leaving condition of the event is satisfied, the UE may stop ongoing reporting in operation 5-30.

According to an embodiment of the disclosure, when an entering condition or a leaving condition of the event (e.g., when the reportOnLeave indicator is configured as true) is satisfied, the UE may perform prediction and/or prediction reporting in operations 5-25 and/or 5-30. When the leaving condition of the event is satisfied, the UE may stop ongoing prediction and/or prediction reporting in operations 5-25 and/or 5-30.

According to an embodiment of the disclosure, values predicted and/or measured by the UE may be Layer 3 RSRP and/or RSRQ and/or SINR, and the values may be obtained by filtering Layer 1 RSRP and/or RSRQ and/or SINR values.

According to an embodiment of the disclosure, values predicted and/or measured by the UE may be Layer 1 RSRP and/or RSRQ and/or SINR.

According to an embodiment of the disclosure, the gNB or the network may deactivate or activate AI/ML prediction and/or reporting by the UE. From the perspective of the UE, performing AI/ML prediction may require a large amount of computing resources and energy consumption, and reporting of results generated therefrom may require a large amount of radio resources and may cause additional energy consumption due to transmission. To prevent excessive energy consumption, the gNB may, depending on a situation or necessity (e.g., when it is determined that there is no issue in UE performance even without AI/ML prediction reporting), instruct the UE to release a configuration for AI/ML prediction (reporting) (e.g., configuration information provided in operation 5-20), and may subsequently reconfigure the same (e.g., when it is determined that AI/ML prediction reporting is required due to a performance issue of the UE).

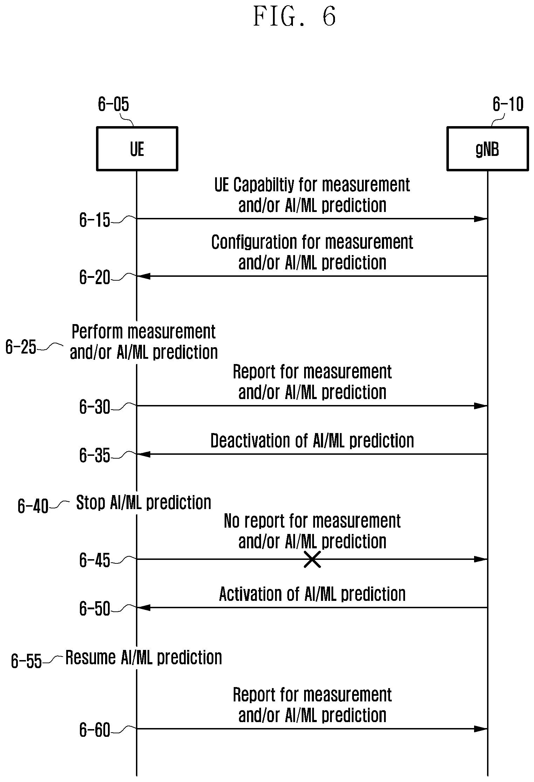

However, repetitive release and reconfiguration of configuration information for AI/ML prediction (reporting) may require a large amount of radio resources (e.g., transmission of an AI/ML model), and may incur latency during the process, thereby preventing immediate release and reconfiguration of AI/ML prediction. Accordingly, rather than instructing the UE to release a configuration for AI/ML prediction (reporting), it may be more efficient to temporarily suspend (deactivate) an operation according to a configuration for AI/ML prediction (reporting). For example, when the UE is instructed to deactivate AI/ML prediction, the UE may maintain a configuration for AI/ML prediction (reporting) but may suspend performing related operations (prediction/reporting), and when the gNB subsequently instructs resumption (activation) of AI/ML prediction, the UE may reuse a configuration for AI/ML prediction (reporting) to perform prediction/reporting operations again. A procedure for activation and deactivation of a configuration for AI/ML prediction (reporting) will be described later with reference to FIG. 6.

FIG. 6 is a flowchart illustrating a procedure for activating and deactivating a configuration for AI/ML prediction (reporting) according to an embodiment of the disclosure.

A description from operation 6-15 to operation 6-30 may refer to a description from operation 5-15 to operation 5-30.

In operation 6-15, a UE 6-05 may transmit, to a gNB 6-10 or a network, information indicating whether the UE supports a function of activation and deactivation of a configuration for AI/ML prediction (reporting). For example, the UE may indicate whether it supports the capability by including a specific indicator in a UE capability information message or by setting the indicator as true, and may indicate that it does not support the capability by omitting the specific indicator or by setting the indicator as false. The information indicating whether the UE supports a function of activation or deactivation of a configuration for AI/ML prediction (reporting) may be transmitted together or separately from mobility-related AI/ML prediction capabilities described with reference to FIG. 5. In operation 6-35, the gNB 6-10 may instruct the UE 6-05 to deactivate configuration information for AI/ML prediction (reporting) provided in operation 6-20. For example, the gNB may determine that there is no problem in the UE and network performance without AI/ML prediction reporting by the UE any longer, and may instruct the UE to deactivate the configuration information for AI/ML prediction (reporting). The deactivation may be indicated via a medium access control (MAC) control element (CE) or an RRC message (e.g., by using a reporting configuration), and the gNB may indicate an association ID, a reporting configuration ID (by including a specific indicator in a corresponding reporting configuration), a measurement object ID (by including a specific indicator in a corresponding measurement object), and/or a specific AI/ML model (e.g., a model ID) to be deactivated, and/or a deactivation period.

In operation 6-40, the UE 6-05 may stop prediction using the AI/ML model and/or configuration information for which deactivation is instructed (e.g., during a deactivation period configured by the gNB).

In operation 6-45, the UE 6-05 may stop measurement reporting using the AI/ML model and/or configuration information for which deactivation is instructed (e.g., during the deactivation period configured by the gNB).

In operation 6-50, the gNB 6-10 may instruct resumption or activation of configuration information for deactivated AI/ML prediction (reporting) to the UE 6-05. For example, the gNB may detect a problem in UE and network performance and instruct resumption/activation of AI/ML prediction reporting by the UE. The activation may be indicated via a MAC CE or an RRC message (e.g., using a reporting configuration), and the gNB may indicate an association ID, a reporting configuration ID (or by including a specific indicator in a corresponding reporting configuration), a measurement object ID (or by including a specific indicator in a corresponding measurement object), and/or a specific AI/ML model (e.g., a model ID) to be activated, and/or an activation period. Here, resuming or activating configuration information for AI/ML prediction (reporting) does not necessarily require that deactivation has been previously instructed. For example, when the UE receives cell measurement and AI/ML prediction-related configuration in operation 6-20, the UE may store the configuration without immediately performing AI/ML prediction/measurement, and may activate AI/ML prediction/measurement only upon receiving a MAC CE or RRC message indicating activation of AI/ML prediction. In operation 6-55, the UE 6-05 may resume prediction using the AI/ML model and/or configuration information for which activation is instructed (e.g., during an activation period configured by the gNB). For prediction using the resumed configuration for AI/ML prediction (reporting), the UE may perform operation 5-25.

In operation 6-60, the UE 6-05 may resume measurement reporting using the AI/ML model and/or configuration information for which activation is instructed (e.g., during an activation period configured by the gNB). For measurement reporting using the resumed configuration for AI/ML prediction (reporting), the UE may perform operation 5-30.

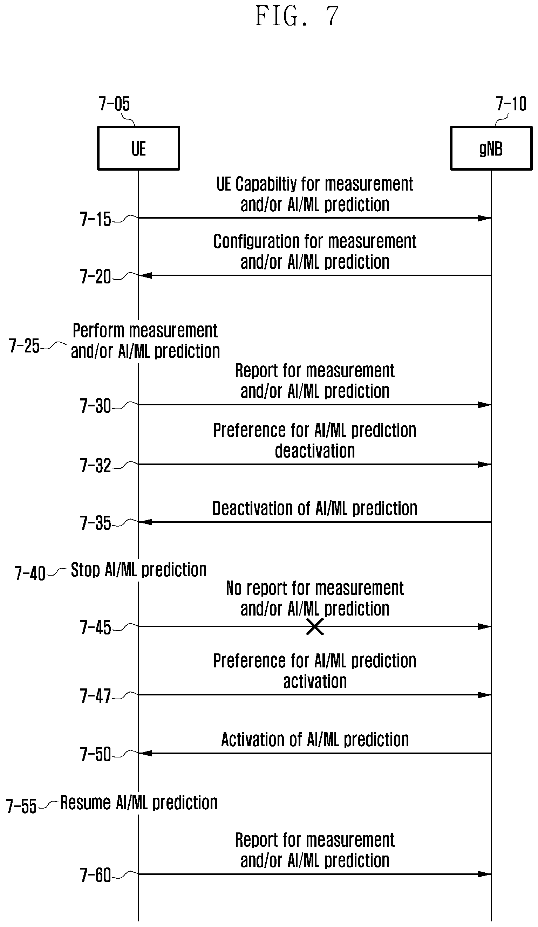

According to an embodiment of the disclosure, the UE may transmit a preference of the UE regarding activation/deactivation of AI/ML prediction and/or reporting to the gNB or the network. As described above, since AI/ML prediction and/or reporting may require significant load or energy for the UE, the UE may transmit its preference, and the gNB or the network may instruct activation/deactivation in consideration thereof. A procedure for activation and deactivation of a configuration for AI/ML prediction (reporting) based on the preference of the UE will be described later with reference to FIG. 7.

FIG. 7 is a flowchart illustrating a procedure for activating and deactivating a configuration for an AI/ML prediction (reporting) according to an embodiment of the disclosure.

The description from operation 7-15 to operation 7-30 may refer to the description from operation 5-15 to operation 5-30.

In operation 7-15, a UE 7-05 may transmit, to a gNB 7-10 or a network, information indicating whether the UE supports a function of activation and deactivation of a configuration for AI/ML prediction (reporting). For example, the UE may indicate whether it supports the capability by including a specific indicator in a UE capability information message or by setting the indicator as true, and may indicate that it does not support the capability by omitting the specific indicator or by setting the indicator as false. In addition, in operation 7-15, the UE may transmit, to the gNB or the network, information indicating whether the UE supports a function of transmitting a preference of the UE regarding activation and deactivation of a configuration for AI/ML prediction (reporting). For example, the UE may indicate whether it supports the capability by including a specific indicator in a UE capability information message or by setting the indicator as true, and may indicate that it does not support the capability by omitting the specific indicator or by setting the indicator as false. The information indicating whether the UE supports the function of activation and deactivation of a configuration for AI/ML prediction (reporting) and/or the information indicating whether the UE supports the function of transmitting the preference of the UE regarding activation and deactivation of a configuration for AI/ML prediction (reporting) may be transmitted together with or separately from the mobility-related AI/ML prediction capabilities described with reference to FIG. 5.

In operation 7-20, the gNB 7-10 may provide, to the UE 7-05, configuration related to transmission of a preference of the UE regarding activation and deactivation of a configuration for AI/ML prediction (reporting) (e.g., to allow/instruct preference transmission), together with or separately from cell measurement and AI/ML prediction-related configuration. For example, the configuration for preference transmission of the UE may be included as part of configuration related to UE assistance information in an RRC Reconfiguration message transmitted by the gNB to the UE. In this case, a prohibit timer for preference transmission of the UE may be configured to control frequent preference transmission of the UE. Alternatively, the configuration for preference transmission of the UE may be included as configuration in a UE information request message transmitted by the gNB to the UE. The gNB may indicate an association ID, a reporting configuration ID (or by including a specific indicator in a corresponding reporting configuration), a measurement object ID (or by including a specific indicator in a corresponding measurement object), and/or a specific AI/ML model (e.g., model ID) for which preference transmission of the UE is instructed/allowed.

In operation 7-32, the UE 7-05 may indicate, to the gNB 7-10, that the UE prefers deactivation of all or part of an AI/ML prediction/reporting configuration (e.g., when the UE is overloaded or for energy saving purposes). The UE may include, in a UE assistance information message, a UE information response message, or a measurement report message, a specific indicator defined to indicate the preference and transmit the message. The UE may indicate an association ID, a reporting configuration ID (or by including a specific indicator in a corresponding reporting configuration), a measurement object ID (or by including a specific indicator in a corresponding measurement object), and/or a specific AI/ML model (e.g., a model ID) for which the UE prefers deactivation.

In operation 7-35, the gNB 7-10 may instruct the UE 7-05 to deactivate configuration information for AI/ML prediction (reporting) provided in operation 7-20. For example, the gNB may determine deactivation in consideration of a preference of the UE for deactivation. For example, the gNB may instruct the deactivation when it is determined that there is no issue in UE and network performance even without AI/ML prediction reporting by the UE. The deactivation may be indicated via a MAC CE or an RRC message (e.g., using a reporting configuration), and the gNB may indicate an association ID, a reporting configuration ID (or by including a specific indicator in a corresponding reporting configuration), a measurement object ID (or by including a specific indicator in a corresponding measurement object), and/or a specific AI/ML model (e.g., model ID) to be deactivated, and/or a deactivation period.

In operation 7-40, the UE 7-05 may stop prediction using the AI/ML model and/or configuration information for which deactivation is instructed (e.g., during a deactivation period configured by the gNB).

In operation 7-45, the UE 7-05 may stop measurement reporting using the AI/ML model and/or configuration information for which deactivation is instructed (e.g., during the deactivation period configured by the gNB).

In operation 7-47, the UE 7-05 may indicate, to the gNB 7-10, that the UE prefers activation/resumption of all or part of an AI/ML prediction/reporting configuration (e.g., when an overload condition of the UE is resolved or when the UE has sufficient energy resources). The UE may include, in a UE assistance information message, a UE information response message, or a measurement report message, a specific indicator defined to indicate the preference and transmit the message. The UE may indicate an association ID, a reporting configuration ID (or by including a specific indicator in a corresponding reporting configuration), a measurement object ID (or by including a specific indicator in a corresponding measurement object), and/or a specific AI/ML model (e.g., model ID) for which the UE prefers activation.

In operation 7-50, the gNB 7-10 may instruct the UE 7-05 to resume or activate configuration information for deactivated AI/ML prediction (reporting). For example, the gNB may determine resumption/activation in consideration of a preference of the UE for activation. For example, the gNB may detect a problem in UE and network performance and instruct resumption/activation of AI/ML prediction reporting by the UE. The activation instruction may be indicated via a MAC CE or an RRC message (e.g., using a reporting configuration), and the gNB may indicate an association ID, a reporting configuration ID (or by including a specific indicator in a corresponding reporting configuration), a measurement object ID (or by including a specific indicator in a corresponding measurement object), and/or a specific AI/ML model (e.g., model ID) to be activated, and/or an activation period. Here, resuming or activating configuration information for AI/ML prediction (reporting) does not necessarily require that deactivation has been previously instructed. For example, when the UE receives cell measurement and AI/ML prediction-related configuration in operation 7-20, the UE may store the configuration without immediately performing AI/ML prediction/measurement, may indicate a preference for activation to the gNB as described in operation 7-47, and may activate AI/ML prediction/measurement only upon receiving a MAC CE or RRC message indicating activation of AI/ML prediction.

In operation 7-55, the UE 7-05 may resume prediction using the AI/ML model and/or configuration information for which activation is instructed (e.g., during an activation period configured by the gNB). For prediction using the resumed configuration for AI/ML prediction (reporting), the UE may perform operation 5-25.

In operation 7-60, the UE 7-05 may resume measurement reporting using the AI/ML model and/or configuration information for which activation is instructed (e.g., during an activation period configured by the gNB). For measurement reporting using the resumed configuration for AI/ML prediction (reporting), the UE may perform operation 5-30.

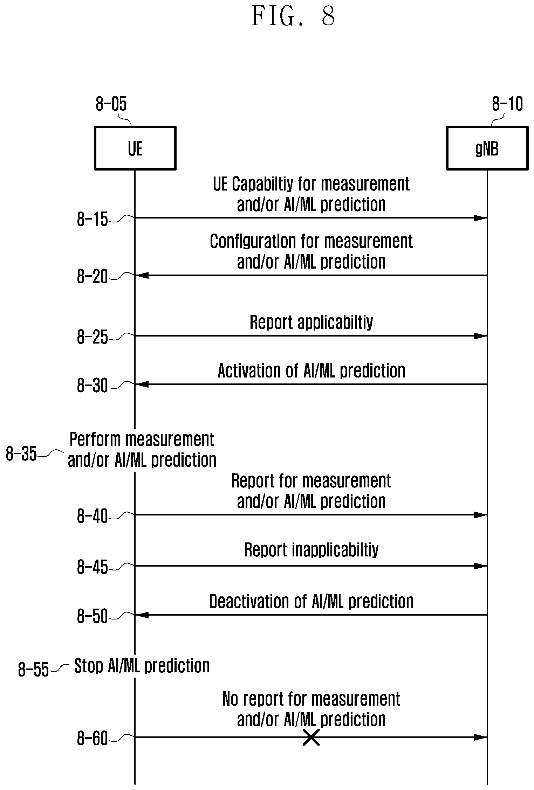

According to an embodiment of the disclosure, even when having an AI/ML prediction model and/or configuration, the UE may not always perform AI/ML prediction. For example, the AI/ML prediction model and/or configuration may be valid or available (or applicable) when a specific condition is satisfied (e.g., when a channel varies rapidly, when the UE is moving, when a location of the UE is within a specific region, when remaining power of the UE is greater than or equal to a specific value, when hardware of the UE meets or exceeds a specific specification, when memory of the UE is greater than or equal to a specific value, or when the UE receives a specific configuration). When the above condition(s) are not satisfied, when the UE reports information generated by operating the AI/ML prediction model to the gNB, the information may be invalid, thereby causing waste of radio resources, and the gNB may operate the network in an incorrect manner. Accordingly, the UE may report, to the gNB, validity, applicability, or availability of the AI/ML prediction model and/or configuration. In the disclosure, validity, applicability, and availability may be collectively referred to as applicability. A procedure for activation and deactivation of a configuration for AI/ML prediction (reporting) based on applicability reporting will be described later with reference to FIG. 8.

FIG. 8 is a flowchart illustrating a procedure for activation and deactivation of a configuration for AI/ML prediction (reporting) according to an embodiment of the disclosure.

The description from operation 8-15 to operation 8-20 may refer to the description from operation 5-15 to operation 5-20.

In operation 8-15, a UE 8-05 may transmit, to a gNB 8-10 or a network, information indicating whether the UE supports a function of activation and deactivation of a configuration for AI/ML prediction (reporting). For example, the UE may indicate whether is supports the capability by including a specific indicator in a UE capability information message or by setting the indicator as true, and may indicate that it does not support the capability by omitting the specific indicator or by setting the indicator as false. In addition, in operation 8-15, the UE may transmit, to the gNB or the network, information indicating whether the UE supports a function of reporting applicability of an AI/ML prediction model and/or configuration. For example, the UE may indicate whether it supports the capability by including a specific indicator in a UE capability information message or by setting the indicator as true, and may indicate that it does not support the capability by omitting the specific indicator or by setting the indicator as false. The information indicating whether the UE supports the function of activation and deactivation of a configuration for AI/ML prediction (reporting) and/or the information indicating whether the UE supports the function of reporting applicability of an AI/ML prediction model and/or configuration may be transmitted together with or separately from the mobility-related AI/ML prediction capabilities described with reference to FIG. 5.

In operation 8-20, the gNB 8-10 may provide, to the UE 8-05, a configuration related to reporting applicability of an AI/ML prediction model and/or configuration (e.g., to allow/instruct applicability transmission), together with or separately from cell measurement and AI/ML prediction-related configuration. For example, the configuration may be included as part of configuration related to UE assistance information in an RRC Reconfiguration message transmitted by the gNB to the UE. In this case, a prohibit timer for preference transmission of the UE may be configured to control frequent applicability transmission by the UE. Alternatively, a configuration for applicability transmission by the UE may be included as a configuration in a UE information request message transmitted by the gNB to the UE. The gNB may indicate an association ID, a reporting configuration ID (or by including a specific indicator in a corresponding reporting configuration), a measurement object ID (or by including a specific indicator in a corresponding measurement object), and/or a specific AI/ML model (e.g., a model ID) for which applicability transmission by the UE is instructed/allowed.

In operation 8-25, the UE 8-05 may indicate, to the gNB 8-10, applicability of all or part of an AI/ML prediction/reporting configuration (e.g., when a specific condition under which the AI/ML prediction model and/or configuration is applicable/usable is satisfied). The UE may include, in a UE assistance information message, a UE information response message, or a measurement report message, a specific indicator defined to indicate the applicability and transmit the message. The UE may indicate an association ID, a reporting configuration ID (or by including a specific indicator in a corresponding reporting configuration), a measurement object ID (or by including a specific indicator in a corresponding measurement object), and/or a specific AI/ML model (e.g., a model ID) for the AI/ML prediction model and/or configuration that is applicable/usable.

In operation 8-30, the gNB 8-10 may instruct the UE 8-05 to activate or use configuration information for AI/ML prediction (reporting) provided in operation 8-20. For example, the gNB may determine activation or use of the configuration information for AI/ML prediction (reporting) in consideration of applicability reporting by the UE. For example, the gNB may receive, from the UE, applicability of the AI/ML prediction model and/or configuration, detect a problem in UE and network performance, and instruct resumption/activation of AI/ML prediction reporting by the UE. The activation may be indicated via a MAC CE or an RRC message (e.g., using a reporting configuration), and the gNB may indicate an association ID, a reporting configuration ID (or by including a specific indicator in a corresponding reporting configuration), a measurement object ID (or by including a specific indicator in a corresponding measurement object), and/or a specific AI/ML model (e.g., model ID) to be activated, and/or an activation period. According to an embodiment of the disclosure, operation 8-30 may be omitted. That is, after reporting the applicability, the UE may perform operations 8-35 and 8-40 without an instruction from the gNB or the network..

In operation 8-35, the UE 8-05 may start/resume prediction using the AI/ML model and/or configuration information for which activation is instructed (e.g., during an activation period configured by the gNB).

In operation 8-40, the UE 8-05 may start/resume measurement reporting using the AI/ML model and/or configuration information for which activation is instructed (e.g., during an activation period configured by the gNB).

In operation 8-45, the UE 8-05 may indicate, to the gNB 8-10, inapplicability of all or part of an AI/ML prediction/reporting configuration (e.g., when a specific condition under which the AI/ML prediction model and/or configuration is applicable/usable is not satisfied). The UE may include, in a UE assistance information message, a UE information response message, or a measurement report message, a specific indicator defined to indicate such inapplicability and transmit the message. The UE may indicate an association ID, a reporting configuration ID (or by including a specific indicator in a corresponding reporting configuration), a measurement object ID (or by including a specific indicator in a corresponding measurement object), and/or a specific AI/ML model (e.g., model ID) for the AI/ML prediction model and/or configuration that is not applicable or usable.

In operation 8-50, the gNB 8-10 may instruct the UE 8-05 to deactivate all or part of an AI/ML model or configuration that is being applied. For example, the gNB may determine deactivation of the AI/ML model or configuration in consideration of a report of inapplicability from the UE. For example, the gNB may receive, from the UE, inapplicability of the AI/ML model or configuration, and determine that there is no longer any issue in UE and network performance even without AI/ML prediction reporting by the UE, and instruct the deactivation. The deactivation may be indicated via a MAC CE or an RRC message (e.g., using a reporting configuration), and the gNB may indicate an association ID, a reporting configuration ID (or by including a specific indicator in a corresponding reporting configuration), a measurement object ID (or by including a specific indicator in a corresponding measurement object), and/or a specific AI/ML model (e.g., model ID) to be deactivated, and/or a deactivation period. According to an embodiment of the disclosure, operation 8-50 may be omitted. That is, after reporting the inapplicability, the UE may perform operations 8-55 and 8-60 without an instruction from the network.

In operation 8-55, the UE 8-05 may stop prediction using the AI/ML model and/or configuration information for which deactivation is instructed (e.g., during a deactivation period configured by the gNB).

In operation 8-60, the UE 8-05 may stop measurement reporting using the AI/ML model and/or configuration information for which deactivation is instructed (e.g., during the deactivation period configured by the gNB).

According to an embodiment of the disclosure, since one or more AI/ML models or features may exist, operations of the network and/or the UE and/or related parameters/indicators described in the above embodiments may be defined or performed per AI/ML model or per feature.

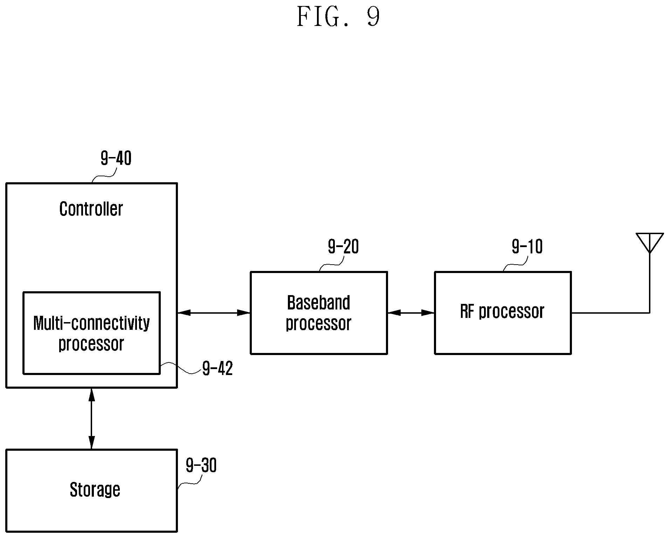

FIG. 9 illustrates a structure of a UE according to an embodiment of the disclosure.

Referring to FIG. 9, the UE may include a radio frequency (RF) processor 9-10, a baseband processor 9-20, a storage 9-30, and a controller 9-40.

The RF processor 9-10 may perform functions for transmitting/receiving signals through a radio channel, such as signal band conversion and amplification. That is, the RF processor 9-10 may up-convert a baseband signal provided from the baseband processor 9-20 to an RF band signal, may transmit the same through an antenna, and may down-convert an RF band signal received through the antenna to a baseband signal. For example, the RF processor 9-10 may include a transmission filter, a reception filter, an amplifier, a mixer, an oscillator, a digital-to-analog converter (DAC), an analog-to-digital converter (ADC), and the like. Although only one antenna is illustrated in the drawing, the UE may include multiple antennas. In addition, the RF processor 9-10 may include multiple RF chains. Furthermore, the RF processor 9-10 may perform beamforming. For the beamforming, the RF processor 9-10 may adjust the phase and magnitude of signals transmitted/received through multiple antennas or antenna elements, respectively. In addition, the RF processor may perform MIMO, and may receive multiple layers when performing an MIMO operation.

The baseband processor 9-20 may perform functions of conversion between baseband signals and bitstrings according to the physical layer specifications of the system. For example, during data transmission, the baseband processor 9-20 may encode and modulate a transmitted bitstring to generate complex symbols. In addition, during data reception, the baseband processor 9-20 may demodulate and decode a baseband signal provided from the RF processor 9-10 to restore a received bitstring. For example, when following the orthogonal frequency division multiplexing (OFDM) scheme, during data transmission, the baseband processor 9-20 may encode and modulate a transmitted bitstring to generate complex symbols, may map the complex symbols to subcarriers, and may configure OFDM symbols through inverse fast Fourier transform (IFFT) operation and cyclic prefix (CP) insertion. In addition, during data reception, the baseband processor 9-20 may split a baseband signal provided from the RF processor 9-10 at the OFDM symbol level, may restore signals mapped to subcarriers through a fast Fourier transform (FFT) operation, and may restore a received bitstring through demodulation and decoding.

The baseband processor 9-20 and the RF processor 9-10 may transmit and receive signals as described above. Therefore, the baseband processor 9-20 and the RF processor 9-10 may be referred to as a transmitter, a receiver, a transceiver, or a communication unit. Furthermore, at least one of the baseband processor 9-20 and the RF processor 9-10 may include multiple communication modules to support multiple different radio access technologies. In addition, at least one of the baseband processor 9-20 and the RF processor 9-10 may include different communication modules to process signals in different frequency bands. For example, the different radio access technologies may include a wireless LAN (e.g., IEEE 802.11), a cellular network (e.g., LTE), etc. In addition, the different frequency bands may include a super high frequency (SHF) (e.g., 2NRHz) band and a millimeter wave (mmWave) (e.g., 60GHz) band.

The storage 9-30 may store basic programs, application programs, and data, such as configuration information, for the operation of the UE. The storage 9-30 may provide the stored data at the request of the controller 9-40.

The controller 9-40 controls the overall operation of the UE. For example, the controller 9-40 may transmit/receive signals through the baseband processor 9-20 and the RF processor 9-10. In addition, the controller 9-40 records data in the storage 9-30 and reads the data from the storage 9-30. To this end, the controller 9-40 may include at least one processor. For example, the controller 9-40 may include a communication processor (CP) that performs control for communication and an application processor (AP) that controls upper layers such as application programs, and may include a multi-connectivity processor 9-42 as illustrated in the drawing.

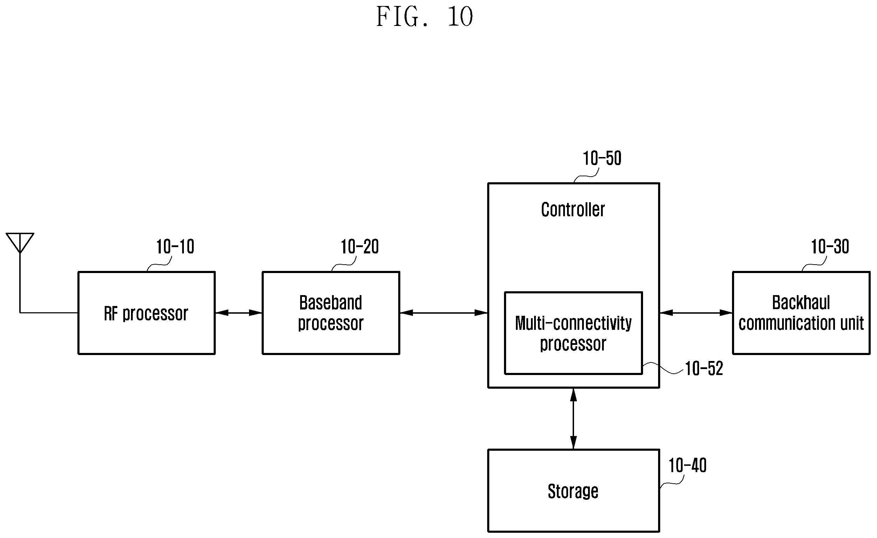

FIG. 10 illustrates a structure of a base station according to an embodiment of the disclosure.

Referring to FIG. 10, the base station may include an RF processor 10-10, a baseband processor 10-20, a backhaul communicator 10-30, a storage 10-40, and a controller 10-50.

The RF processor 10-10 may perform functions for transmitting/receiving signals through a radio channel, such as signal band conversion and amplification. That is, the RF processor 10-10 may up-convert a baseband signal provided from the baseband processor 10-20 to an RF band signal, may transmit the same through an antenna, and may down-convert an RF band signal received through the antenna to a baseband signal. For example, the RF processor 10-10 may include a transmission filter, a reception filter, an amplifier, a mixer, an oscillator, a DAC, and an ADC. Although only one antenna is illustrated in the drawing, the base station may include multiple antennas. In addition, the RF processor 10-10 may include multiple RF chains. Furthermore, the RF processor 10-10 may perform beamforming. For the beamforming, the RF processor 10-10 may adjust the phase and magnitude of signals transmitted/received through multiple antennas or antenna elements, respectively. The RF processor may transmit one or more layers to perform a downward MIMO operation.

The baseband processor 10-20 may perform functions of conversion between baseband signals and bitstrings according to the physical layer specifications of a radio access technology. For example, during data transmission, the baseband processor 10-20 may encode and modulate a transmitted bitstring to generate complex symbols. In addition, during data reception, the baseband processor 10-20 may demodulate and decode a baseband signal provided from the RF processor 10-10 to restore a received bitstring. For example, when following the OFDM scheme, during data transmission, the baseband processor 10-20 may encode and modulate a transmitted bitstring to generate complex symbols, may map the complex symbols to subcarriers, and may configure OFDM symbols through IFFT operation and CP insertion. In addition, during data reception, the baseband processor 10-20 may split a baseband signal provided from the RF processor 10-10 at the OFDM symbol level, may restore signals mapped to subcarriers through FFT operation, and may restore a received bitstring through demodulation and decoding. The baseband processor 10-20 and the RF processor 10-10 may transmit and receive signals as described above. Therefore, the baseband processor 10-20 and the RF processor 10-10 may be referred to as a transmitter, a receiver, a transceiver, or a communication unit.

The backhaul communication unit 10-30 provides an interface for communicating with other nodes in the network. That is, the backhaul communication unit 10-30 converts bitstrings transmitted from the main base station to other nodes, for example, an auxiliary base station, a core network, etc., into physical signals, and converts physical signals received from the other nodes into bitstrings.

The storage 10-40 may store basic programs, application programs, and data, such as configuration information, for the operation of the main base station. In particular, the storage 10-40 may store information regarding a bearer allocated to a connected UE, a measurement result reported from the connected UE, and the like. In addition, the storage 10-40 may store information serving as criteria to determine whether to provide multi-connectivity to a UE or to suspend same. In addition, the storage 10-40 may provide the stored data at the request of the controller 10-50.

The controller 10-50 controls the overall operation of the main base station. For example, the controller 10-50 transmits/receives signals through the baseband processor 10-20 and the RF processor 10-10 or through the backhaul communication unit 10-30. In addition, the controller 10-50 records data in the storage 10-40 and reads the data from the storage 10-40. To this end, the controller 10-50 may include at least one processor, and may include a multi-connectivity processor 10-52 as illustrated in the drawing.

The embodiments of the disclosure described and shown in the specification and the drawings are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented.

In addition, the above respective embodiments may be employed in combination, as necessary. As an example, a part of one embodiment of the disclosure may be combined with a part of another embodiment to operate a base station and a terminal. In addition, the embodiments of the disclosure may also be applied to other communication systems and other variants based on the technical idea of the embodiments may also be implemented. For example, the embodiments may be applied to LTE, 5G, NR, or 6G systems. Therefore, the scope of the disclosure should not be defined as being limited to the embodiments set forth herein, but should be defined by the appended claims and equivalents thereof.

## Claims

1. A method performed by a terminal in a wireless communication system, the method comprising:
receiving, from a base station, a first message including configuration information for artificial intelligence and machine learning (AI/ML)-based measurement prediction;
transmitting, to the base station, a second message for reporting applicability of the AI/ML-based measurement prediction, based on the configuration information;
identifying that the AI/ML-based measurement prediction is activated; and
transmitting, to the base station, a report on a result of the activated AI/ML-based measurement prediction.

2. The method of claim 1, wherein the first message further comprises information indicating whether the terminal is allowed to report the applicability of the AI/ML-based measurement prediction.

3. The method of claim 1, wherein the AI/ML-based measurement prediction is activated based on receiving, from the base station, information indicating activation of the AI/ML-based measurement prediction after transmitting the second message, or
wherein the AI/ML-based measurement prediction is considered to be activated, based on transmitting the second message.

4. The method of claim 1, further comprising:
identifying that the AI/ML-based measurement prediction is not applicable;
transmitting, to the base station, a third message for reporting that the AI/ML-based measurement prediction is not applicable; and
receiving, from the base station, information indicating deactivation of the AI/ML-based measurement prediction.

5. A method performed by a base station in a wireless communication system, the method comprising:
transmitting, to a terminal, a first message including configuration information for artificial intelligence and machine learning (AI/ML)-based measurement prediction;
receiving, from the terminal, a second message for reporting applicability of the AI/ML-based measurement prediction associated with the configuration information;
identifying that the AI/ML-based measurement prediction is activated in the terminal; and
receiving, from the terminal, a report on a result of the activated AI/ML-based measurement prediction.

6. The method of claim 5, wherein the first message further comprises information indicating whether the terminal is allowed to report the applicability of the AI/ML-based measurement prediction.

7. The method of claim 5, wherein the AI/ML-based measurement prediction is activated in the terminal, based on transmitting, to the terminal, information indicating activation of the AI/ML-based measurement prediction after receiving the second message, or
wherein the AI/ML-based measurement prediction is considered to be activated in the terminal, based on receiving the second message.

8. The method of claim 5, further comprising:
receiving, from the terminal, a third message for reporting that the AI/ML-based measurement prediction is not applicable; and
transmitting, to the terminal, information indicating deactivation of the AI/ML-based measurement prediction.

9. A terminal in a wireless communication system, the terminal comprising:
a transceiver; and
a controller configured to:
receive, from a base station via the transceiver, a first message including configuration information for artificial intelligence and machine learning (AI/ML)-based measurement prediction,
transmit, to the base station via the transceiver, a second message for reporting applicability of the AI/ML-based measurement prediction, based on the configuration information,
identify that the AI/ML-based measurement prediction is activated, and
transmit, to the base station via the transceiver, a report on a result of the activated AI/ML-based measurement prediction.

10. The terminal of claim 9, wherein the first message further comprises information indicating whether the terminal is allowed to report the applicability of the AI/ML-based measurement prediction.

11. The terminal of claim 9, wherein the AI/ML-based measurement prediction is activated based on receiving, from the base station, information indicating activation of the AI/ML-based measurement prediction after transmitting the second message, or
wherein the AI/ML-based measurement prediction is considered to be activated, based on transmitting the second message.

12. The terminal of claim 9, wherein the controller is configured to:
identify that the AI/ML-based measurement prediction is not applicable;
transmit, to the base station via the transceiver, a third message for reporting that the AI/ML-based measurement prediction is not applicable; and
receive, from the base station via the transceiver, information indicating deactivation of the AI/ML-based measurement prediction.

13. A base station in a wireless communication system, the base station comprising:
a transceiver; and
a controller configured to:
transmit, to a terminal via the transceiver, a first message including configuration information for artificial intelligence and machine learning (AI/ML)-based measurement prediction,
receive, from the terminal via the transceiver, a second message for reporting applicability of the AI/ML-based measurement prediction associated with the configuration information,
identify that the AI/ML-based measurement prediction is activated in the terminal, and
receive, from the terminal via the transceiver, a report on a result of the activated AI/ML-based measurement prediction.

14. The base station of claim 13, wherein the first message further comprises information indicating whether the terminal is allowed to report the applicability of the AI/ML-based measurement prediction, and
wherein the AI/ML-based measurement prediction is activated in the terminal, based on transmitting, to the terminal, information indicating activation of the AI/ML-based measurement prediction after receiving the second message, or
wherein the AI/ML-based measurement prediction is considered to be activated in the terminal, based on receiving the second message.

15. The base station of claim 13, wherein the controller is configured to:
receive, from the terminal via the transceiver, a third message for reporting that the AI/ML-based measurement prediction is not applicable; and
transmit, to the terminal via the transceiver, information indicating deactivation of the AI/ML-based measurement prediction.
